(19) 

Europäisches
Patentamt
European
Patent Office
Office européen
des brevets

(11) **EP 4 443 336 A1**

(12) **EUROPEAN PATENT APPLICATION**
published in accordance with Art. 153(4) EPC

(43) Date of publication:
**09.10.2024 Bulletin 2024/41**

(21) Application number: **22914653.5**

(22) Date of filing: **26.12.2022**

(51) International Patent Classification (IPC):
**G06N 3/08** (2023.01)

(52) Cooperative Patent Classification (CPC):
**G06F 16/33; G06F 16/332; G06F 16/35;
G06N 3/0499; G06N 3/08;** Y02D 10/00

(86) International application number:
**PCT/CN2022/141881**

(87) International publication number:
**WO 2023/125399 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111666571**

(71) Applicants:
• **CHINA MOBILE COMMUNICATION CO., LTD.
RESEARCH INSTITUTE
Beijing 100053 (CN)**
• **CHINA MOBILE COMMUNICATIONS GROUP CO.,
LTD.
Beijing 100032 (CN)**

(72) Inventors:
• **HUANG, Yi
Beijing 100053 (CN)**
• **ZHANG, Shuo
Beijing 100053 (CN)**
• **WANG, Pinghui
Beijing 100053 (CN)**
• **YANG, Yang
Beijing 100053 (CN)**
• **FENG, Junlan
Beijing 100053 (CN)**

(74) Representative: **J A Kemp LLP
80 Turnmill Street
London EC1M 5QU (GB)**

(54) **DIALOG STRATEGY OBTAINING METHOD AND APPARATUS AND RELATED DEVICE**

(57) A dialog strategy obtaining method and apparatus and a related device. The method comprises: obtaining first information used for representing a current dialog state (101); on the basis of the first information, obtaining a first hidden vector corresponding to the current dialog state (102); and then according to the first hidden vector, simulating a K-segment single-action dialog to obtain a dialog strategy (103).

EP 4 443 336 A1

First information for characterizing a current dialog state is acquired. —— 101

A first hidden vector corresponding to the current dialog state is obtained based on the first information. —— 102

K single-action dialogs are simulated based on the first hidden vector to obtain the dialog policy, and K is a positive integer. —— 103

**FIG. 2**

**Description**

CROSS-REFERENCE TO RELATED APPLICATION

This application is filed based on and claims priority to Chinese Patent application No. 202111666571.5, filed on December 31, 2021, the content of which is hereby incorporated by reference in its entirety.

TECHNICAL FIELD

The disclosure relates to the technical field of natural language processing, and more particularly to a method and apparatus for acquiring a dialog policy, and a related device.

BACKGROUND

A Task-oriented Dialog System (TDS) can help a user complete specific tasks (such as restaurant reservations) using a natural language, and has been applied to various business services. In order to solve the problem of lengthy dialogs in a traditional dialog policy, research on Multi-Agent Task-Oriented Dialog Policy Learning (MADPL) has emerged.

In the related art, the MADPL directly imitates and learns action combinations in an artificial dialog dataset. However, the action combinations in the artificial dialog dataset are limited, and potential action combinations are often not covered in the artificial dialog dataset, which leads to a poor generalization effect of the MADPL in a real-world scenario.

SUMMARY

Embodiments of the disclosure provide a method and apparatus for acquiring a dialog policy, and a related device.

In a first aspect, an embodiment of the disclosure provides a method for acquiring a dialog policy, which includes the following operations.

First information for characterizing a current dialog state is acquired.

A first hidden vector corresponding to the current dialog state is obtained based on the first information.

K single-action dialogs are simulated based on the first hidden vector to obtain the dialog policy. K is a positive integer.

In a second aspect, an embodiment of the disclosure provides an apparatus for acquiring a dialog policy, which includes an acquisition module, a first determination module and a second determination module.

The acquisition module is configured to acquire first information for characterizing a current dialog state.

The first determination module is configured to obtain, based on the first information, a first hidden vector corresponding to the current dialog state.

The second determination module is configured to simulate, based on the first hidden vector, K single-action dialogs to obtain the dialog policy. K is a positive integer.

In a third aspect, an embodiment of the disclosure provides an electronic device, which includes a processor, a memory, and a computer program stored on the memory and operable on the processor. The processor is configured to execute the computer program to implement operations of the method for acquiring a dialog policy in the first aspect.

In a fourth aspect, an embodiment of the disclosure provides a computer readable storage medium having stored thereon a program that, when executed by a processor, causes the processor to implement operations of the method for acquiring a dialog policy in the first aspect.

In the embodiments of the disclosure, the first information for characterizing the current dialog state is acquired; the first hidden vector corresponding to the current dialog state is obtained based on the first information; and then K single-action dialogs are simulated based on the first hidden vector to obtain the dialog policy. In this way, a dialog state transition can be modeled in a compact hidden state space by simulating the K single-action dialogs based on the first hidden vector, which can improve the efficiency and accuracy of a planning, thereby improving the generalization effect of the MADPL in the real-world scenario.

BRIEF DESCRIPTION OF THE DRAWINGS

In order to more clearly illustrate technical solutions of the disclosure, the following will provide a description to the drawings required in the description. It will be apparent that the following drawings are the embodiments of the disclosure, from which other drawings can be obtained without creative work by those of ordinary skill in the art.

FIG. 1 is a diagram illustrating a comparison of processes between a traditional dialog policy and a multi-action dialog policy.

FIG. 2 is a first flowchart illustrating a method for acquiring a dialog policy according to an embodiment of the disclosure.

FIG. 3 is a second flowchart illustrating a method for acquiring a dialog policy according to an embodiment of the disclosure.

FIG. 4 is a structural diagram of an apparatus for acquiring a dialog policy according to an embodiment of the disclosure.

FIG. 5 is a structural diagram of an electronic device according to an embodiment of the disclosure.

DETAILED DESCRIPTION

Technical solutions in the embodiments of the disclosure will be clearly and completely described below with reference to the drawings in the embodiments of the disclosure. It is apparent that the described embodiments are part of the embodiments of the disclosure, rather than all of the embodiments. All other embodiments obtained by those of ordinary skill in the art based on the embodiments of the disclosure, without paying any creative work shall fall within the scope of protection of the disclosure.

In order to better understand the method provided by the disclosure, the following will provide a brief introduction to the background of the method provided by the disclosure firstly.

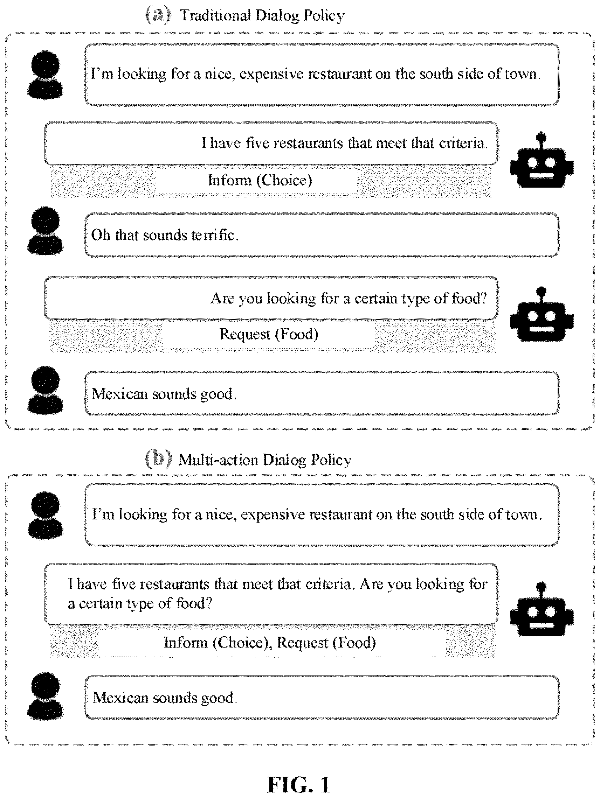

A TDS can help a user complete specific tasks (such as restaurant reservations) using a natural language, and has been applied to various business services. In the TDS, the dialog policy largely affects an efficiency of a dialog (such as a conciseness and fluency of the dialog), which determines a next dialog action based on a current dialog state. Referring to FIG 1, FIG 1 is a diagram illustrating a comparison of processes between a traditional dialog policy and a multi-action dialog policy. The traditional dialog policy usually assumes that a system only generates a single dialog action per round for the current dialog state, which will lead to lengthy dialogs and increase a risk of task failure. In order to solve the above weaknesses, some research has emerged on MADPL, which improves an expressive ability and the efficiency of the TDS by simultaneously generating multiple actions as a response to the current state.

At present, there are usually two main types of mainstream technical routes for the MADPL, i.e., a supervised learning method and a robust learning method.

The supervised learning method learns the multi-action dialog policy by imitating action combinations in human dialog samples stored in an artificial dialog dataset. It often uses a basic network, such as a fully-connected feed-forward neural network, a recursive neural network, etc., to decode and predict multiple dialog actions based on the current dialog state. However, due to a "one-to-many" characteristic of a task-based dialog, that is, there may be multiple suitable responses in the same dialog scenario, different action combinations may be considered in a multi-action setting as responses in the same dialog scenario, and these potentially reasonable action combinations are often not covered in the artificial dialog dataset. Therefore, the method in the related art for directly imitating the human dialog samples in the artificial dialog dataset tends to explore only a small subspace in the entire action space, it is difficult to effectively deal with a human-computer dialog in reality that has never been seen before, and the robustness is poor, which leads to a poor generalization effect of the MADPL in a real-world scenario in the related art.

The robust learning method solves the problem of poor generalization effect of the MADPL in the real-world scenario from the following three perspectives: 1) active learning, which enhances data through a human-computer interaction; 2) reinforcement learning, which facilitates further learning through the human-computer interaction; and 3) adversarial learning, which uses a neural network-based discriminator to determine response quality and provides additional supervision signals. However, the performance improvement brought by the method offered through the above three perspectives needs to come at the cost of additional supervision costs. For example, it requires a significant amount of manual labor to mark dialogs, build a real-world environmental system, and design a complex learning policy. In addition, algorithms based on reinforcement learning and adversarial learning suffer from unstable training processes, which requires additional deployment costs in a practical application. Therefore, although the robust learning method can solve the problem of poor generalization effect of the MADPL in the real-world scenario, it has problems such as high costs of deployment and difficulty in maintenance.

In order to better solve the current problem that MADPL has a poor generalization effect in the real-world scenario, the disclosure provides a method for acquiring a dialog policy. The method for acquiring the dialog policy provided by the disclosure deeply utilizes annotation information of the dataset. Different from directly imitating the action combinations, the method achieves the generalization in the real-world scenario by fully exploring the decision-making mode for multiple actions, thereby improving the generalization effect of the MADPL in the real-world scenario. In addition, the method for acquiring the dialog policy provided by the disclosure achieves efficient joint training of various modules, on the premise of improving the generalization effect in the real-world scenario, additional manual annotation and environmental modeling are avoided as much as possible, thereby reducing the costs of deployment and subsequent maintenance.

The core idea of the method for acquiring the dialog policy provided by the disclosure is to pre-conceive a dialog content using each single-action dialog, and use the dialog content as auxiliary information to enhance the prediction of multi-action. Initially, only single-action dialogs are considered, and the single-action prediction at a system side and an answering pattern for the single-action at a user side are modeled, such that the model can simulate the dialog process of the single-action. Therefore, the content to be expressed can be prepared by simulating the single-action dialogs before predicting the multi-action, and then the dialog policy is obtained based on the simulated multiple single-action dialogs, which is described in detail below.

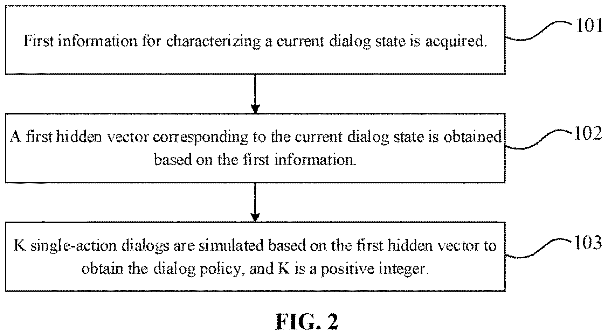

Referring to FIG. 2 FIG. 2 is a first flowchart illustrating a method for acquiring a dialog policy according to an embodiment of the disclosure.

As illustrated in FIG. 2, the method provided by an embodiment of the disclosure includes the following operations.

At operation 101, first information for characterizing a current dialog state is acquired.

The current dialog state may be considered as a summary of all interactions between the user and the system prior to the current response. Illustratively, the first information includes at least one of: a characterization result of a returned entity of a query; a last system action before the current dialog state; a last user action before the current dialog state; a state of a request slot of a user; or a state of a notification slot of a system. Herein, the state of the request slot of the user and the state of the notification slot of the system are determined by an actual situation. If information input by the user is: "how is the weather today", then the state of the request slot of the user may be set with two slot positions (i.e., time and location), and the state of the notification slot of the system may be set with one slot position (i.e., weather condition).

At operation 102, a first hidden vector corresponding to the current dialog state is obtained based on the first information.

In a specific implementation, a structured dialog state $s_t$ is first constructed based on the first information, t represents a current dialog round, and t is a positive integer.

The structured dialog state $s_t$ may be a 553-bit vector. A Fully-connected Feed-forward Network (FFN) may be used to extract dense hidden state features, i.e., the first hidden vector $h_t$. The FFN may consist of two linear transformations, between which there is a Rectified Linear Unit (ReLU) activation function.

Specifically, $h_t=FFN_{enc}(s_t)=max(0,s_t W_1+b_1)W_2+b_2$. The current dialog state may be set as an initial dialog state, i.e., t=0, a structured dialog state characterization $s_0$ is constructed based on the first information, and a first hidden vector $h_0$ for describing the initial dialog state is obtained.

At operation 103, K single-action dialogs are simulated based on the first hidden vector to obtain the dialog policy. K is a positive integer.

In a specific implementation, a single-action dialog planning module is introduced to model a co-occurrence pattern of various actions in the dialog context by using actions in human dialog samples stored in an artificial dialog dataset. The K single-action dialogs are simulated based on the first hidden vector to obtain the dialog policy. A dialog state transition can be modeled in a compact hidden state space by simulating the K single-action dialogs based on the first hidden vector, which can improve an efficiency and accuracy of the planning, thereby improving a generalization effect of the MADPL in a real-world scenario.

In the embodiment of the disclosure, the first information for characterizing the current dialog state is acquired; the first hidden vector corresponding to the current dialog state is obtained based on the first information; and then K single-action dialogs are simulated based on the first hidden vector to obtain the dialog policy. In this way, the dialog state transition can be modeled in a compact hidden state space by simulating the K single-action dialogs based on the first hidden vector, which can improve the efficiency and accuracy of the planning, thereby improving the generalization effect of the MADPL in the real-world scenario.

In some optional embodiments, the operation 103 may include the following operations. The first hidden vector is input into a first model and a second model respectively, each of the K single-action dialogs is simulated, and K target hidden vectors and K groups of action sequences are obtained. The first model is a discrete policy model, the second model is a world model simulating a user behavior, and the K groups of the action sequences include at least one action predicted by the first model. The dialog policy is obtained based on the first hidden vector, the K target hidden vectors and the K groups of the action sequences.

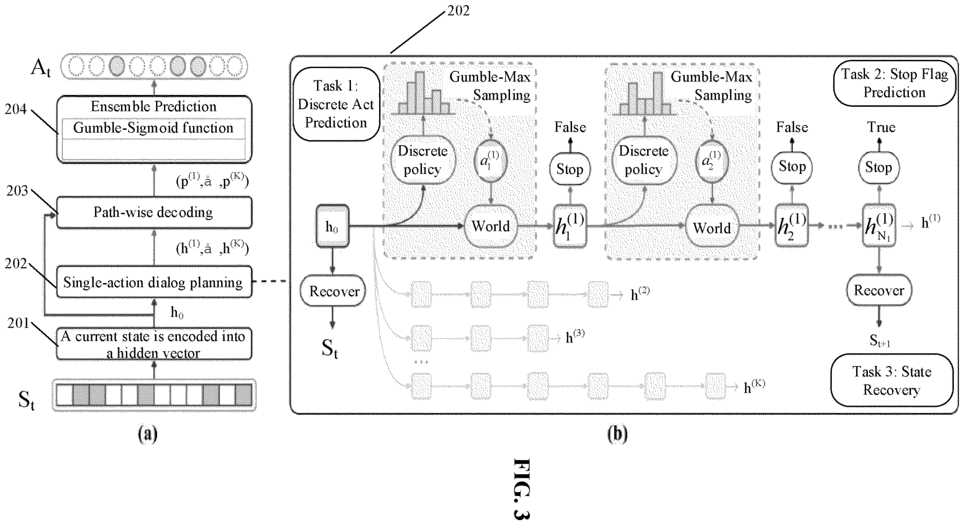

Referring to FIG. 3, FIG. 3 is a second flowchart illustrating a method for acquiring a dialog policy according to an embodiment of the disclosure. As illustrated in operation 202 of FIG. 3, which illustrates a specific flow of the single-action dialog planning, a simulation of one of the K single-action dialogs is exemplified to explain how to simulate the K single-action dialogs based on the first hidden vector to obtain the dialog policy.

The first hidden vector $h_0$ for describing the initial dialog state is input into the discrete policy model and the world model, and the discrete policy model and the world model interact with each other for several dialog rounds in the single-action dialog mode, that is, each of the K single-action dialogs predicts several dialog rounds forward based on the current dialog state. Finally, a target hidden vector $h^{(1)}$ and an action sequence ( $a_1^{(1)}$、 $a_2^{(1)}...$ ) corresponding to the single-action dialog are obtained. In each of the several dialog rounds that are predicted forward, the first model predicts a respective action, and the action predicted in each of the several dialog rounds that are predicted forward form the action sequence ( $a_1^{(1)}$、 $a_2^{(1)}...$ ).

The process for simulating other single-action dialogs in the K single-action dialogs is similar to the above process. Finally, the K target hidden vectors $h^{(1)}$, $h^{(2)}$, $h^{(3)}$ ... $h^{(K)}$ and the K groups of the action sequences are obtained.

In the embodiment of the disclosure, the first hidden vector is input into the first model and the second model respectively, each of the K single-action dialogs is simulated, and K target hidden vectors and K groups of action sequences are obtained; and then the dialog policy is obtained based on the first hidden vector, the K target hidden vectors and the K groups of the action sequences. In this way, several dialog rounds can be predicted forward based on the current dialog state, additional information other than the artificial dialog dataset, such as the K target hidden vectors and the K groups of the action sequences, can be obtained to determine the dialog policy, so that the limited artificial dialog dataset can be deeply utilized to achieve the generalization for an unknown human-computer dialog, thereby improving the generalization effect of the MADPL in the real-world scenario.

In some optional embodiments, the operation of inputting the first hidden vector into the first model and the second model respectively, simulating each of the K single-action dialogs, and obtaining the K target hidden vectors and the K groups of the action sequences includes the following operations. The first hidden vector is input into the first model to obtain a first action. The K groups of the action sequences include the first action. The first hidden vector and the first action are input into the second model, to obtain a second hidden vector. The second hidden vector corresponds to a future dialog state, and the future dialog state is a dialog state subsequent to the current dialog state, which is predicted forward by the second model based on the first hidden vector and the first action. The first hidden vector is compared with the second hidden vector to obtain a comparison result. In response to the comparison result complying with a preset rule, the second hidden vector obtained by the second model is determined as a target hidden vector among the K target hidden vectors.

In a specific implementation, referring to FIG. 3, as illustrated in operation 202 of FIG. 3, which illustrates the specific flow of the single-action dialog planning, a simulation of one of the K single-action dialogs is exemplified to explain how to obtain the target hidden vector and the action sequence.

The first hidden vector $h_0$ is input into the first model (DP) to obtain the first action $a_1^{(1)}$ , then the first hidden vector $h_0$ and the first action $a_1^{(1)}$ are input into the second model (world model) to obtain a second hidden vector $h_1^{(1)}$ , and the initial hidden vector $h_0$ is compared with the hidden vector $h_1^{(1)}$ (at this time n=1) of the current dialog round to determine whether to stop the planning.

If the comparison result does not comply with the preset rule, the planning is not stopped, and the input hidden vector is updated and the above operations are repeated, i.e., the first hidden vector is updated to $h_1^{(1)}$ and input into the first model (DP) to obtain the first action $a_2^{(1)}$ , and then the first hidden vector $h_1^{(1)}$ and the first action $a_2^{(1)}$ are input into the second model (world model) to obtain the second hidden vector $h_2^{(1)}$ . Note that the first hidden vector before the update operation (i.e., the initial hidden vector $h_0$) is still compared with the hidden vector $h_n^{(1)}$ (at this time n=2) of the current dialog round, and whether to stop the planning is determined based on the comparison result.

The final second hidden vector $h^{(1)}$ obtained by the second model is determined as one of the K target hidden vectors until the comparison result complies with the preset rule. The target hidden vector $h^{(1)}$ can summarize the single-action dialog.

The above operations are explained in detail below in combination with specific expressions. For example, one dialog round is predicted forward in the single-action dialog, i.e., from $h_{t,n}^{(k)}$ to $h_{t,n+1}^{(k)}$, where k is a single-action dialog index, t is a dialog round, and n is a positive integer. The single-action dialog index k and the dialog round t are omitted for clarity. Given a hidden dialog state $h_n$, an action $a_n$ is firstly predicted and then $h_n$ is updated into $h_{n+1}$ by using $a_n$, which may be achieved through the iterative interaction between the discrete policy model (DP) and the world model, that is:

$$a_n = DP(\mathrm{h_n}) \Box \quad \mathrm{Soft\,max}^{(Td)}(\mathrm{h_n W_d} + b_d) ,$$

$$h_{n+1} = World(\mathrm{h_n}, a_n) \Box \quad _{,} \mathrm{Emb}(a_n)) .$$

Herein $a_n$ is an integer, and DP is a single-layer linear layer followed by a Gumble-Softmax function. The Gumble-Softmax function samples a single dialog action from a categorical distribution based on probabilities, which enhances the diversity of the planning path (i.e., a state transition path in a hidden space for the single-action dialog). $T_d$ is used to balance an approximation bias and gradient variance. A classical Gated Recurrent Unit (GRU) is employed as the world model to model a hidden state transition pattern. Emb represents an embedded encoding layer that returns a hidden vector for a given single dialog action $a_n$.

An execution of multiple actions in parallel and a sequential execution of the corresponding single actions will lead to similar (or identical) dialog state transitions. Therefore, it is assumed that once this amount of state transition is reached, the predicted information is sufficient, and further planning may be stopped. Based on this, a proposal is made to determine whether to stop planning by comparing the initial hidden state $h_0$ and the current hidden state $h_n$, which may be modeled using a neural network, that is:

$$c_n = \mathrm{GumbelSoft\,max}^{(Ts)}(FFN_{st}([\mathrm{h_0} : \mathrm{h_n}])) .$$

Herein $c_n$ is a binary variable, ":" represents vector concatenation, and FFN is a 2-layer fully-connected feed-forward network with ReLU as an intermediate layer activation function.

In the embodiment of the disclosure, the first hidden vector is input into the first model to obtain a first action. The K groups of the action sequences include the first action. The first hidden vector and the first action are input into the second model, to obtain a second hidden vector. This allows the decision-making process of the dialog action combination to be decoupled and refined. Firstly, the model simulates the single-action dialog to determine a dialog topic content and a relevant action content, and then combines actions based on this. In this way, the limited data can be deeply utilized, and the generalization for the unknown human-computer dialog is achieved, thereby improving the generalization effect of the MADPL in the real-world scenario.

In addition, the simulation of the single-action dialog is achieved through the joint modeling of the user side and the system side. Before a multi-action prediction, several dialog rounds can be predicted forward based on the current dialog state, so as to simulate dialog content, thereby achieving context-based action co-occurrence pattern modeling and enhancing the subsequent multi-action prediction.

In some optional embodiments, the operation of obtaining the dialog policy based on the first hidden vector, the K target hidden vectors and the K groups of the action sequences includes the following operation. The K target hidden vectors are input into a third model to obtain K target states. The third model is a recovery model, implemented by a fully-connected feed-forward network, that can map a hidden vector to a structured state space, and the dialog policy includes the K target states.

In a specific implementation, referring to FIG. 3, in order to learn the dialog state transition in the hidden space, the recovery model is used to map the initial planned hidden vector $h_0$ and final planned hidden vector $h_N$ back to the structured state space, so as to match the dialog state $s_t$ of the current dialog round and the dialog state $s_{t+1}$ of the next dialog round respectively.

$$s_t = \mathrm{Recover}(\mathrm{h_0}) ,$$

$$s_{t+1} = \text{Recover}(h_N)$$

Herein the recovery model (i.e., Recover) may be implemented by the FNN. The Recover and a state encoder form an auto-encoder that ensures correspondence with the structured dialog state.

In some optional embodiments, the operation of obtaining the dialog policy based on the first hidden vector, the K target hidden vectors and the K groups of the action sequences includes the following operation. Each of K groups of probability distributions corresponding to a respective one of the K groups of the action sequences is determined based on the first hidden vector and the K target hidden vectors. Each probability distribution in the K groups of the probability distributions is used for describing whether a respective action in the K groups of the action sequences is selected, and the dialog policy includes the K groups of the probability distributions.

In the embodiment, given the initial hidden vector $h_0$ and final hidden vector $h^{(K)}$, the probabilities of the multiple actions are decoded by using the neural network, and applied to each path (i.e., each single-action dialog). Since the task modeling provided by the embodiment of the disclosure assumes that there is no dependency relationship between dialog actions, each specific action in the action sequence is binary classified to determine whether the action is selected. A decoder may be constructed using a group of FFNs:

$$p^{(k)} = \left[ p_1^{(k)} : \ldots : p_M^{(k)} \right],$$

$$p_m^{(k)} = FFN_m^{dec}\left( \left[ h_0 : h^{(k)} \right] \right).$$

Herein ":" represents vector concatenation, $k$ represents a number of the planning path (i.e., a number of the single-action dialog), $M$ is a size of the action space (i.e., the number of actions in the action sequence).

Specifically, $p^{(k)}$ represents probability distributions corresponding to an action sequence, and there are M actions in the action sequence, $m$ and $M$ being positive integers. $p_m^{(k)}$ represents a probability of an m-th action in the action sequence of a k-th single-action dialog. When $k = 1$, $p_1^{(k)}$ is $p_1^{(1)}$, which represents a probability of an action $a_1^{(1)}$. If $p_1^{(1)}$ is 0, the action $a_1^{(1)}$ is not selected; if $p_1^{(1)}$ is 1, the action $a_1^{(1)}$ is selected.

In the embodiment of the disclosure, each of the K groups of probability distributions corresponding to a respective one of the K groups of the action sequences is determined based on the first hidden vector and the K target hidden vectors, so that the simulated K single-action dialogs may be decoded sequentially and then aggregated, which effectively avoids an impact of an error in the planning dialog on the dialog policy. During decoding, the action sequence is treated as a collection, and multiple binary classification models are used to select whether to take each action in the action sequence, instead of an original multi-label classification model, so that each action in the action space may be effectively decoupled, thereby reducing an impact of noise between actions.

In some optional embodiments, the method further includes the following operations. After determining each of the K groups of the probability distributions corresponding to the respective one of the K groups of the action sequences based on the first hidden vector and the K target hidden vectors, the K groups of the probability distributions are integrated using an aggregation function to obtain an aggregation result. The aggregation function includes a function implemented in terms of an average value. The aggregation result is sampled to obtain a target action group for answering the current dialog state. The dialog policy includes the target action group.

In the embodiment, in order to effectively reduce an impact of a bad path (i.e., a poor single-action dialog), the aggregation function may be used to integrate the K groups of probability distributions corresponding to the K groups of the action sequences, that is,

$$P_t = Aggr(p^{(1)}, \ldots, p^{(K)})$$

In the embodiment of the disclosure, the aggregation function is implemented in terms of the average value. Task-oriented dialog has an important characteristic of "one-to-many", and different actions may be taken in the same context, which requires the incorporation of random factors into the dialog policy. In addition, the embodiment of the disclosure has verified through experiments that such randomness may be achieved by a basic sampling method. In an embodiment of the disclosure, a Gumbel-Sigmoid function may be used to sample multiple actions, which is illustrated below.

$$A_t = GumbelSigmoid(\mathrm{P}_t) = \frac{e^{(\mathrm{P}_t + \mathrm{g}_1)}/T}{e^{(\mathrm{P}_t + \mathrm{g}_1)}/T + e^{(\mathrm{P}_t + \mathrm{g}_2)}/T}.$$

Herein the Gumbel-sigmoid function is a modification of the Gumbel-Softmax function, and sigmoid is treated as a softmax with two logits, i.e., p and 0. *T* is a temperature factor, $g_1$ and $g_2$ are two samples drawn from Gumbel noise, and $A_t$ is a target action group.

In the embodiment of the disclosure, the K groups of the probability distributions are integrated using an aggregation function to obtain an aggregation result, the aggregation result is sampled to obtain a target action group for answering the current dialog state, and the dialog policy includes the target action group, which can effectively reduce the impact of the poor single-action dialog in the K single-action dialogs, and can consider the impact of the random factors in the dialog policy, thereby improving the generalization ability and robustness of the dialog policy for the human-computer dialogs in the real-world scenario.

The embodiments of the disclosure further propose a multi-task objective joint training for the models used in the embodiments of the disclosure, such as the first model, the second model and the recovery model, to determine values of variable parameters in the models. Each task is a supervised learning task, and a multi-task provided by the embodiment of the disclosure includes Task 1, Task 2, and Task 3.

Task 1: Discrete Act Prediction (DAP). For a planned single-action sequence $a = (a_0,...,a_{N-1})$, the objective is to maximize a log-likelihood Estimation (MLE) of a joint probability $p(a|h_0)$, which may be decomposed into:

$$\mathrm{p}(a \mid \mathbf{h}_0) = \underbrace{\mathrm{p}_\theta(a_n \mid \mathbf{h}_n)}_{\text{DAP}} \underbrace{\mathrm{p}_\phi(\mathbf{h}_n \mid a_{n-1}, \mathbf{h}_{n-1})}_{\text{state transition}}.$$

Herein $\theta$ and $\varphi$ represent trainable parameters of the discrete dialog policy model and the world model respectively.

Task 2: Stop Flag Prediction (SFP). Similar to Task 1, the objective is defined to predict a stop flag for the sequence.

$c = (c_1,...,c_N)$ is the MLE of the joint probability $p(a|h_0)$, which may be decomposed into:

$$\mathrm{p}(\mathrm{c} \mid \mathbf{h}_0) = \prod_{n=1}^{N} \underbrace{\mathrm{p}_\gamma(\mathrm{c}_n \mid \mathbf{h}_n, \mathbf{h}_0)}_{\text{SFP}} \underbrace{\mathrm{p}_{\phi,\theta}(\mathbf{h}_n \mid \mathbf{h}_{n-1})}_{\text{1-step planning}}.$$

Herein $\gamma$ represents a trainable parameter of a stop predicting model, the joint probability of $p_{\phi,\theta}(h_n|h_{n-1})$ is decomposed into a state transition and a discrete act prediction of $p_\phi(h_n|a_{n-1}, h_{n-1})p_\theta(a_{n-1}|h_{n-1})$.

Task 3: State Recovery (SR). An objective of the state recovery is considered to supervise a state encoding and the state transition. To be precise, the current dialog state $s_t$, the next dialog state $s_{t+1}$, the initial hidden vector $h_0$ and the last hidden vector $h_N$ are predicted to be:

$$\mathrm{p}(\boldsymbol{s}_t) = \underbrace{\mathrm{p}_\varsigma(\boldsymbol{s}_t \mid \mathbf{h}_0)}_{\text{SR}} \underbrace{\mathrm{p}_\eta(\mathbf{h}_0 \mid \boldsymbol{s}_t)}_{\text{state encoding}},$$

$$\mathrm{p}(\boldsymbol{s}_{t+1} \mid \boldsymbol{s}_t) = \underbrace{\mathrm{p}_\varsigma(\boldsymbol{s}_{t+1} \mid \mathbf{h}_N)}_{\text{SR}} \underbrace{\mathrm{p}_\eta(\mathbf{h}_0 \mid \boldsymbol{s}_t)}_{\text{state encoding}} \prod_1^N \underbrace{\mathrm{p}_{\phi,\theta}(\mathbf{h}_n \mid \mathbf{h}_{n-1})}_{\text{1}-\text{step planning}}.$$

Herein $\eta$ and $\varsigma$ are trainable parameters of the state encoder and the Recover, respectively. The explanation for the joint probability $p_{\phi,\vartheta}(\mathbf{h}_n|\mathbf{h}_{n-1})$ here is the same as the explanation in Task 2.

It should be noted that, due to the diversity of human dialogs, it is not assumed that there is prior knowledge of a sequential dependency among dialog actions. Instead, it is assumed that, for any single-action sequence within multiple actions, there always be a reasonable single-action dialog process corresponding to the real world. To this end, the single-action dialog planning module is trained using all possible sequence combinations of expert instances. In practice, this is achieved by randomly scrambling the action sequences in each batch before forward propagation.

The method for acquiring the dialog policy provided by the embodiments of the disclosure uses a supervised multi-task learning method to deeply explore and utilize the annotation information in the dataset, without introducing additional data sources, which significantly reduce manual workload, ensures stable training, and facilitates deployment and updating of actual industry applications. That is, the method for acquiring the dialog policy provided by the embodiments of the disclosure avoids additional manual annotation and the environmental modeling as much as possible on the premise of improving the generalization effect in the real-world scenario, and reduces the costs of deployment and subsequent maintenance.

Referring to FIG. 3, the method for acquiring the dialog policy provided by the disclosure is described below with an embodiment.

The method for acquiring the dialog policy provided by the disclosure includes the following operations.

At operation 201, an input current state is encoded into a hidden vector $h_0$. Specifically, a structured dialog state characterization $s_t$ is constructed, and a FFN is used to extract dense hidden state features based on the dialog state characterization $s_t$, where t represents a current dialog round, and the dialog state characterization $s_t$ includes four types of information: a characterization result corresponding to an entity returned by a query; a last user action; a last system action; and signaling states containing a request slot of a user and a notification slot of a system.

At operation 202, a single-action dialog is planned. Specifically, K single-action dialogs are simulated based on the encoded hidden vector. Specifically, a k-th dialog is simulated by simulating $N_k$ rounds backward from the current dialog state. In each round of the simulated dialog, a discrete policy network is used to predict a dialog action $a_{n+1}$, as a system response, for the given current dialog hidden state $h_n$, and a world model is used to simulate a user behavior to predict a next dialog state $h_{n+1}$ for a given previous dialog state $h_n$ and the system response $a_{n+1}$.

At operation 203, a path-wise decoding is performed. Specifically, for each simulated dialog, probability distributions for predicting multiple actions that should be performed concurrently are decoded. Specifically, the probabilities of the multiple actions may be decoded using a neural network and are applied to each path respectively.

At operation 204, ensemble prediction is performed. Specifically, the decoded probabilities are aggregated and the multiple actions to be performed are sampled. Specifically, the probabilities of the multiple actions are integrated using an average aggregation function, and it is verified through experiments that such randomness may be achieved by a basic sampling method.

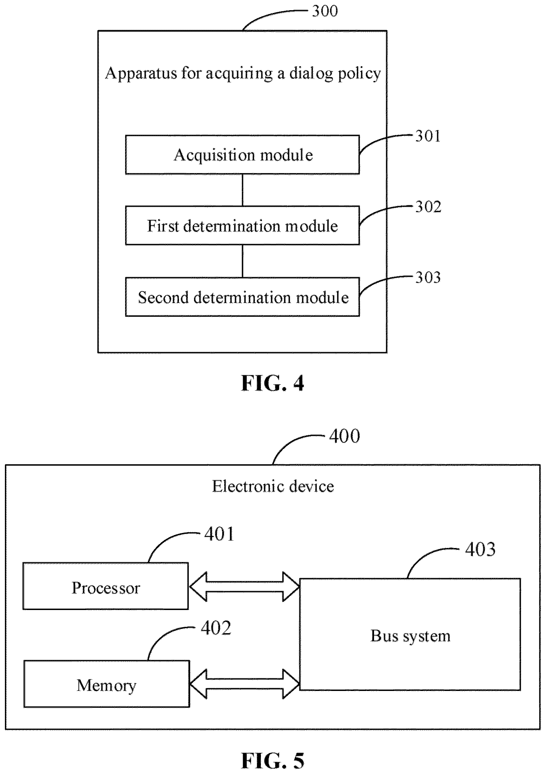

Referring to FIG. 4, an embodiment of the disclosure provides an apparatus 300 for acquiring a dialog policy, which includes an acquisition module 301, a first determination module 302 and a second determination module 303.

The acquisition module 301 is configured to acquire first information for characterizing a current dialog state.

The first determination module 302 is configured to obtain, based on the first information, a first hidden vector corresponding to the current dialog state.

The second determination module 303 is configured to simulate, based on the first hidden vector, K single-action dialogs to obtain the dialog policy. K is a positive integer.

In some optional embodiments, the first information includes at least one of: a characterization result of a returned entity of a query; a last system action before the current dialog state; a last user action before the current dialog state; a state of a request slot of a user; or a state of a notification slot of a system.

In some optional embodiments, the second determination module 303 is configured to: input the first hidden vector into a first model and a second model respectively, simulate each of the K single-action dialogs, and obtain K target hidden vectors and K groups of action sequences. The first model is a discrete policy model, the second model is a world model simulating a user behavior, and the K groups of the action sequences include at least one action predicted by the first model. The second determination module 303 is further configured to obtain the dialog policy based on the first hidden vector, the K target hidden vectors and the K groups of the action sequences.

In some optional embodiments, the second determination module 303 is configured to input the first hidden vector into the first model to obtain a first action. The K groups of the action sequences include the first action. The second determination module 303 is further configured to input the first hidden vector and the first action into the second model, to obtain a second hidden vector. The second hidden vector corresponds to a future dialog state, and the future dialog state is a dialog state subsequent to the current dialog state, which is predicted forward by the second model based on the first hidden vector and the first action. The second determination module 303 is further configured to: compare the first hidden vector with the second hidden vector to obtain a comparison result; and in response to the comparison result complying with a preset rule, determine the second hidden vector obtained by the second model as a target hidden vector among the K target hidden vectors.

In some optional embodiments, the second determination module 303 is configured to input the K target hidden vectors into a third model to obtain K target states. The third model is a recovery model, implemented by a fully-connected feed-forward network, that can map a hidden vector into a structured state space, and the dialog policy includes the K target states.

In some alternative embodiments, the second determination module 303 is configured to determine each of K groups of probability distributions corresponding to a respective one of the K groups of the action sequences based on the first hidden vector and the K target hidden vectors. Each probability distribution in the K groups of the probability distributions is used for describing whether a respective action in the K groups of the action sequences is selected, and the dialog policy includes the K groups of the probability distributions.

In some alternative embodiments, the second determination module 303 is further configured to: integrate, using an aggregation function, the K groups of the probability distributions to obtain an aggregation result. The aggregation function includes a function implemented in terms of an average value. The second determination module 303 is further configured to sample the aggregation result to obtain a target action group for answering the current dialog state. The dialog policy includes the target action group.

The apparatus 300 for acquiring the dialog policy provided by the embodiment of the disclosure can implement each process that can be implemented in the method for acquiring the dialog policy in the embodiments of the disclosure, and achieve the same beneficial effects, which will not be repeated here to avoid duplication.

An embodiment of the disclosure provides an electronic device. As illustrated in FIG. 5, the electronic device 400 includes a processor 401, a memory 402, and a computer program stored on the memory 402 and operable on the processor. The various components in the electronic device 400 are coupled together via a bus system 403. It should be understood that the bus system 403 is configured to implement connection and communication between these components.

When the computer program is executed by the processor, the processor is configured to implement the following operations. First information for characterizing a current dialog state is acquired. A first hidden vector corresponding to the current dialog state is obtained based on the first information. K single-action dialogs are simulated based on the first hidden vector to obtain the dialog policy. K is a positive integer.

In some optional embodiments, the first information includes at least one of: a characterization result of a returned entity of a query; a last system action before the current dialog state; a last user action before the current dialog state; a state of a request slot of a user; or a state of a notification slot of a system.

In some optional embodiments, when the computer program is executed by the processor, the processor is configured to implement the following operations. The first hidden vector is input into a first model and a second model respectively, each of the K single-action dialogs is simulated, and K target hidden vectors and K groups of action sequences are obtained. The first model is a discrete policy model, the second model is a world model simulating a user behavior, and the K groups of the action sequences include at least one action predicted by the first model. The dialog policy is obtained based on the first hidden vector, the K target hidden vectors and the K groups of the action sequences.

In some optional embodiments, when the computer program is executed by the processor, the processor is configured to implement the following operations. The first hidden vector is input into the first model to obtain a first action. The K groups of the action sequences include the first action. The first hidden vector and the first action are input into the second model, to obtain a second hidden vector. The second hidden vector corresponds to a future dialog state, and the future dialog state is a dialog state subsequent to the current dialog state, which is predicted forward by the second model based on the first hidden vector and the first action. The first hidden vector is compared with the second hidden vector to obtain a comparison result. In response to the comparison result complying with a preset rule, the second hidden vector obtained by the second model is determined as a target hidden vector among the K target hidden vectors.

In some optional embodiments, when the computer program is executed by the processor, the processor is configured to implement the following operations. The K target hidden vectors are input into a third model to obtain K target states. The third model is a recovery model, implemented by a fully-connected feed-forward network, that can map a hidden vector into a structured state space, and the dialog policy includes the K target states.

In some optional embodiments, when the computer program is executed by the processor, the processor is configured to implement the following operations. Each of K groups of probability distributions corresponding to a respective one of the K groups of the action sequences is determined based on the first hidden vector and the K target hidden vectors. Each probability distribution in the K groups of the probability distributions is used for describing whether a respective action in the K groups of the action sequences is selected, and the dialog policy includes the K groups of the probability distributions.

In some optional embodiments, when the computer program is executed by the processor, the processor is configured to implement the following operations. After determining each of the K groups of the probability distributions corresponding to the respective one of the K groups of the action sequences based on the first hidden vector and the K target hidden vectors, the K groups of the probability distributions are integrated using an aggregation function to obtain an aggregation result. The aggregation function includes a function implemented in terms of an average value. The aggregation result is sampled to obtain a target action group for answering the current dialog state. The dialog policy includes the target action group.

The electronic device 400 provided by the embodiment of the disclosure can implement each process that can be implemented by the method for acquiring the dialog policy in the embodiments of the disclosure, and achieve the same beneficial effects, which will not be repeated here to avoid duplication.

An embodiment of the disclosure further provides a computer readable storage medium having stored thereon a computer program that, when executed by a processor, causes the processor to implement each process in the method for acquiring the dialog policy in the embodiments of the disclosure, and achieve the same beneficial effects, which will not be repeated here to avoid duplication. The computer readable storage medium may be a memory, such as a Read-Only Memory (ROM), a Random Access Memory (RAM), a magnetic disk or an optical disk, etc.

The features disclosed in several method embodiments or device embodiments provided by the disclosure may be arbitrarily combined without conflicting with each other, to obtain new method embodiments or new device embodiments.

In several embodiments provided by the disclosure, it should be understood that the disclosed apparatus and methods may be implemented in other ways. The device embodiments described above are merely illustrative, for example, the division of the units is only a logical functional division, and there may be other division methods when it is actually implemented. For example, multiple units or components may be combined, or may be integrated into another system, or some features may be ignored, or not be executed. In addition, the displayed or discussed coupling, or direct coupling, or communication connection among various components may be indirect coupling or communication connection implemented through some interfaces, apparatuses or units, and may be implemented in electrical, mechanical, or other forms.

The units described above as separate parts may be, or may not be, physically separated. The components displayed as units may be, or may not be, physical units, that is, they may be located in one place or may be distributed across multiple network units. Some or all of these units may be selected according to actual needs to achieve the purpose of the embodiments.

In addition, functional units in each embodiment of the disclosure may be integrated into one processing unit, or each of the functional units may exist as an individual unit, or two or more functional units may be integrated into one unit. The integrated unit may be implemented in the form of hardware, or in the form of a combination of hardware and software function units.

The embodiments of the disclosure are described above with reference to the drawings. However, the disclosure is not limited to the above specific implementations, and the above specific implementations are merely illustrative, rather than limitation. Many forms made by those of ordinary skill in the art under the inspiration of the disclosure, without departing from the principle of the disclosure and the scope of protection of the claims, shall fall with the scope of protection of the disclosure.

## Claims

1.  A method for acquiring a dialog policy, comprising:

    acquiring first information for characterizing a current dialog state;
    obtaining, based on the first information, a first hidden vector corresponding to the current dialog state; and
    simulating, based on the first hidden vector, K single-action dialogs to obtain the dialog policy, K being a positive integer.

2.  The method of claim 1, wherein the first information comprises at least one of:

    a characterization result of a returned entity of a query;
    a last system action before the current dialog state;
    a last user action before the current dialog state;
    a state of a request slot of a user; or
    a state of a notification slot of a system.

3.  The method of claim 1, wherein simulating, based on the first hidden vector, the K single-action dialogs to obtain the dialog policy comprises:

inputting the first hidden vector into a first model and a second model respectively, simulating each of the K single-action dialogs, and obtaining K target hidden vectors and K groups of action sequences, wherein the first model is a discrete policy model, the second model is a world model simulating a user behavior, and the K groups of the action sequences comprise at least one action predicted by the first model; and

obtaining the dialog policy based on the first hidden vector, the K target hidden vectors and the K groups of the action sequences.

4. The method of claim 3, wherein inputting the first hidden vector into the first model and the second model respectively, simulating each of the K single-action dialogs, and obtaining the K target hidden vectors and the K groups of the action sequences comprises:

inputting the first hidden vector into the first model to obtain a first action, wherein the K groups of the action sequences comprise the first action;

inputting the first hidden vector and the first action into the second model, to obtain a second hidden vector, wherein the second hidden vector corresponds to a future dialog state, and the future dialog state is a dialog state subsequent to the current dialog state, which is predicted forward by the second model based on the first hidden vector and the first action;

comparing the first hidden vector with the second hidden vector to obtain a comparison result; and

in response to the comparison result complying with a preset rule, determining the second hidden vector obtained by the second model as a target hidden vector among the K target hidden vectors.

5. The method of claim 3, wherein obtaining the dialog policy based on the first hidden vector, the K target hidden vectors and the K groups of the action sequences comprises:
inputting the K target hidden vectors into a third model to obtain K target states, wherein the third model is a recovery model, implemented by a fully-connected feed-forward network, that can map a hidden vector into a structured state space, and the dialog policy comprises the K target states.

6. The method of claim 3, wherein obtaining the dialog policy based on the first hidden vector, the K target hidden vectors and the K groups of the action sequences comprises:
determining each of K groups of probability distributions corresponding to a respective one of the K groups of the action sequences based on the first hidden vector and the K target hidden vectors, wherein each probability distribution in the K groups of the probability distributions is used for describing whether a respective action in the K groups of the action sequences is selected, and the dialog policy comprises the K groups of the probability distributions.

7. The method of claim 6, further comprising:

after determining each of the K groups of the probability distributions corresponding to the respective one of the K groups of the action sequences based on the first hidden vector and the K target hidden vectors,

integrating, using an aggregation function, the K groups of the probability distributions to obtain an aggregation result, wherein the aggregation function comprises a function implemented in terms of an average value; and

sampling the aggregation result to obtain a target action group for answering the current dialog state, wherein the dialog policy comprises the target action group.

8. An apparatus for acquiring a dialog policy, comprising:

an acquisition module, configured to acquire first information for characterizing a current dialog state;

a first determination module, configured to obtain, based on the first information, a first hidden vector corresponding to the current dialog state; and

a second determination module, configured to simulate, based on the first hidden vector, K single-action dialogs to obtain the dialog policy, K being a positive integer.

9. An electronic device, comprising a processor, a memory, and a computer program stored on the memory and operable on the processor, wherein when the computer program is executed by the processor, the processor is configured to implement operations of the method for acquiring a dialog policy of any of claims 1 to 7.

10. A computer readable storage medium having stored thereon a program that, when executed by a processor, causes the processor to implement operations of the method for acquiring a dialog policy of any of claims 1 to 7.

(a) Traditional Dialog Policy

> I'm looking for a nice, expensive restaurant on the south side of town.

> I have five restaurants that meet that criteria.
>
> Inform (Choice)

> Oh that sounds terrific.

> Are you looking for a certain type of food?
>
> Request (Food)

> Mexican sounds good.

(b) Multi-action Dialog Policy

> I'm looking for a nice, expensive restaurant on the south side of town.

> I have five restaurants that meet that criteria. Are you looking for a certain type of food?
>
> Inform (Choice), Request (Food)

> Mexican sounds good.

**FIG. 1**

First information for characterizing a current dialog state is acquired. — 101

A first hidden vector corresponding to the current dialog state is obtained based on the first information. — 102

K single-action dialogs are simulated based on the first hidden vector to obtain the dialog policy, and K is a positive integer. — 103

**FIG. 2**

FIG. 3

(b)

Task 2: Stop Flag Prediction

True — Stop — $h_{N_1}^{(1)} \rightarrow h^{(1)}$ — Recover — $S_{t+1}$

Task 3: State Recovery

False — Stop — $h_2^{(1)}$

Gumble-Max Sampling — $a_2^{(1)}$ — World — Discrete policy

False — Stop — $h_1^{(1)}$

Gumble-Max Sampling — $a_1^{(1)}$ — World — Discrete policy

Task 1: Discrete Act Prediction

$h_0$ — Recover — $S_t$

$h^{(2)}$, $h^{(3)}$, $h^{(K)}$

202

(a)

$A_t$

Ensemble Prediction
Gumble-Sigmoid function — 204

$(p^{(1)}, ..., p^{(K)})$

Path-wise decoding — 203

$(h^{(1)}, ..., h^{(K)})$

Single-action dialog planning — 202

$h_0$

A current state is encoded into a hidden vector — 201

$S_t$

300

Apparatus for acquiring a dialog policy

Acquisition module — 301

First determination module — 302

Second determination module — 303

**FIG. 4**

400

Electronic device

Processor — 401

Memory — 402

Bus system — 403

**FIG. 5**

## INTERNATIONAL SEARCH REPORT

| International application No. |
|---|
| **PCT/CN2022/141881** |

**A. CLASSIFICATION OF SUBJECT MATTER**

G06N 3/08(2023.01)i

According to International Patent Classification (IPC) or to both national classification and IPC

**B. FIELDS SEARCHED**

Minimum documentation searched (classification system followed by classification symbols)

IPC:G06N,G06F,G06K,G10L

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 对话策略, 对话管理, 多行为, 多动作, 预测, 学习, 离散策略模型, 世界模型, dialogue policy, dialogue management, MADPL, multi-action, prediction, learning, discrete strategy model, world model

**C. DOCUMENTS CONSIDERED TO BE RELEVANT**

| Category* | Citation of document, with indication, where appropriate, of the relevant passages | Relevant to claim No. |
|---|---|---|
| A | CN 110309275 A (BEIJING JINGDONG SHANGKE INFORMATION TECHNOLOGY CO., LTD. et al.) 08 October 2019 (2019-10-08)<br>entire document | 1-10 |
| A | CN 112949858 A (ITIBIA TECHNOLOGIES (SUZHOU) CO., LTD.) 11 June 2021 (2021-06-11)<br>entire document | 1-10 |
| A | CN 113821620 A (HUBEI ECARX TECHNOLOGY CO., LTD.) 21 December 2021 (2021-12-21)<br>entire document | 1-10 |
| A | US 2019324795 A1 (MICROSOFT TECHNOLOGY LICENSING, LLC.) 24 October 2019 (2019-10-24)<br>entire document | 1-10 |
| A | US 2021383212 A1 (SALESFORCE.COM, INC.) 09 December 2021 (2021-12-09)<br>entire document | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2023** | **16 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
|---|
| **PCT/CN2022/141881** |

### C. DOCUMENTS CONSIDERED TO BE RELEVANT

| Category* | Citation of document, with indication, where appropriate, of the relevant passages | Relevant to claim No. |
|---|---|---|
| PX | ZHANG, Shuo et al. ""Think Before You Speak": Improving Multi-Action Dialog Policy by Planning Single-Action Dialogs" *https://arxiv.org/abs/2204.11481,* 25 April 2022 (2022-04-25), sections 1-3 | 1-10 |
| X | SHU, Lei et al. "Modeling Multi-Action Policy for Task-Oriented Dialogues" *https://arxiv.org/abs/1908.11546,* 30 August 2019 (2019-08-30), sections 1-2 | 1-2, 8-10 |

Form PCT/ISA/210 (second sheet) (July 2022)

**INTERNATIONAL SEARCH REPORT**
**Information on patent family members**

International application No.

**PCT/CN2022/141881**

| Patent document cited in search report | | | Publication date (day/month/year) | Patent family member(s) | | | Publication date (day/month/year) |
|---|---|---|---|---|---|---|---|
| CN | 110309275 | A | 08 October 2019 | WO | 2019174450 | A1 | 19 September 2019 |
| CN | 112949858 | A | 11 June 2021 | None | | | |
| CN | 113821620 | A | 21 December 2021 | None | | | |
| US | 2019324795 | A1 | 24 October 2019 | None | | | |
| US | 2021383212 | A1 | 09 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111666571